# EUROPÄISCHE PATENTSCHRIFT

(11) **EP 2 292 457 B1**
(45) Veröffentlichungstag und Bekanntmachung des Hinweises auf die Patenterteilung: **13.03.2013**
(21) Anmeldenummer: 09011252.5
(22) Anmeldetag: 02.09.2009
(51) Int. Cl.: B60J 7/06

(54) **Rollenwagen für ein Schiebebügelverdeck für LKW oder LKW-Anhänger**
Trolley for a slide bracket cover for HGV or HGV trailers
Chariot sur roulettes pour une bâche à arceaux coulissants pour camion ou remorque de camion

(43) Veröffentlichungstag der Anmeldung: 09.03.2011
(73) Patentinhaber: VBG GROUP TRUCK EQUIPMENT GmbH, 47807 Krefeld (DE)
(72) Erfinder: Wensing, Udo, 46145 Oberhausen (DE); Hahnen, Hans Boris, 47475 Kamp-Lintfort (DE); Neumeyer, Frank, 47877 Willich (DE); Frentzen, Frank, 41749 Viersen (DE); Birkenbach, Rolf, 47809 Krefeld (DE); Roßbach, Joachim, 41747 Viersen (DE); Kemmerling, Karl, 42719 Solingen (DE); Scholz, Axel, 47447 Moers (DE); Lauterbach, Tim, 41066 Mönchengladbach (DE); Weigelt, Rolf, 47228 Duisburg (DE)
(74) Vertreter: DR. STARK & PARTNER

(56) Entgegenhaltungen:
- FR-A- 1 238 055
- FR-A1- 2 896 008
- US-A- 5 685 227

## Beschreibung

Die Erfindung betrifft ein Schiebebügelverdeck für LKW oder LKW-Anhänger, welches auf der Ladefläche des LKW entlang der Längsseiten der Ladefläche verlaufende Lauf- und Führungsschienen umfasst, in denen Rollen aufweisende Rollenwagen mit jeweils portalartig ausgebildeten Haltebügeln und einer an den Haltebügeln angebrachten Verdeckplane verschieblich geführt sind, wobei zumindest ein Rollenwagen mit einer Feststelleinrichtung zum Verhindern einer unbeabsichtigten Verlagerung des Rollenwagens entlang der Lauf- und Führungsschienen versehen ist.

Aus der Praxis sind derartige Rollenwagen bekannt, bei denen die Feststelleinrichtung als ein gegen die Lauf- und Führungsschiene klemmbares Blockierelement ausgebildet ist. Dieses Blockierelement kann entweder als eine Schraube ausgebildet sein, die durch Verdrehen gegen die Lauf- und Führungsschiene gepresst werden oder von ihr beabstandet werden kann. Nachteilig hierbei ist, dass ein langes Halten des offenen Verdecks erforderlich ist, bis eine ausreichende Klemmung hergestellt worden ist. Zudem ist an die Erreichbarkeit häufig eingeschränkt und bei ungenügender Betätigung und damit nicht ausreichender Klemmung kann es aufgrund von Verlagerungen zu einem Schaben an der Lauf- und Führungsschiene, und damit zu Beschädigungen der Lauf- und Führungsschiene, kommen.

Diese Probleme können auch bei Blockierelemente, die über einen Schwenkhebel oder eine Schubstange ein Gummielement an die Lauf- und Führungsschiene pressen, auftreten. Zudem sind solche Blockierelemente bei bestimmungsgemäßem Gebrauch biegebelastet, und durch Verschleiß des Gummielements können Funktionsbeeinträchtigungen auftreten.

Auch sind Blockierelemente bekannt, die in eine entsprechende Ausnehmung oder Bohrung der Lauf- und Führungsschiene herein geschoben werden und somit eine formschlüssige Festlegung das Rollenwagens erzielen. Nachteilig hierbei ist, dass für jede Position eine neue Bohrung benötigt wird, wodurch die Lauf- und Führungsschiene geschwächt wird. Zudem kann es durch die Bohrungen aufgrund scharfer Kanten zu Beschädigungen der Rollen kommen, und der Lauf der Rollen kann gestört werden.

Die FR 1238055 A zeigt den Oberbegriff des Anspruchs 1.

Aufgabe der Erfindung ist es, die vorgenannten Nachteile zu vermeiden und ein Schiebebügelverdeck anzugeben, mit dem auf einfache Weise eine unbeabsichtigte Verlagerung des Rollenwagens entlang der Lauf- und Führungsschienen eine verhindert werden kann.

Diese Aufgabe wird durch die kennzeichnenden Merkmale des Anspruchs 1 gelöst.

Hierdurch ist einerseits eine Feststellung des Rollenwagens in jeder gewünschten Position möglich. Zudem erfolgt keine Schwächung der Lauf- und Führungsschiene, da weder Bohrungen erforderlich sind noch ein Schaben eines nicht vollständig blockierenden Blockierelementes erfolgen kann. Aufgrund der keilförmigen Ausgestaltung des Keilelementes wird die Eigenschaft der Selbsthemmung genutzt, so dass das Keilelement bei Verlagerung in die eine Richtung eine Bremswirkung entfaltet und sich bei Verlagerung in die andere Richtung selbsttätig löst.

Durch das zumindest eine die Ausrichtung des Keilelements gewährleistende und eine andere als die durch die Drehachse vorgegebene Verschwenkung des Keilelements zumindest im wesentlichen verhindernde Führungselement hat das Keilelement in seiner Freigabeposition auch keinen Kontakt mit der Lauf- und Führungsschiene.

Durch das Verriegelungselement zur Festlegung des Keilelements in seiner Freigabeposition ist eine versehentliche Verlagerung in die Feststellposition nicht möglich.

Da das Verriegelungselement durch das Führungselement gebildet ist und mit einer entsprechenden Aussparung in dem Keilelement zusammenwirkend ausgebildet ist, erfolgt eine automatische Verriegelung bei der Verlagerung in die Freigabeposition.

Vorzugsweise kann das Keilelement um eine Drehachse verschwenkbar mit einem Hebel verbunden oder an diesem angebracht sein, wobei der Hebel um eine von der Drehachse beabstandet angeordnete Schwenklagerung verschwenkbar angeordnet ist. Hierdurch ist auf einfache Weise eine Verlagerung des Keilelementes zwischen seiner Freigabeposition und seiner Feststellposition möglich, und durch die Betätigung mittels eines Hebels ist nur eine geringe Kraft hierfür erforderlich.

Dabei kann das Führungselement als ein an dem Rollenwagen angeordneter, insbesondere stabförmig ausgeprägter, Vorsprung ausgebildet sein, und an dem Keilelement kann eine mit dem Vorsprung zusammenwirkende schräge Fläche vorgesehen sein, so dass bei Verschwenken des Hebels eine entsprechende "lenkende" Beeinflussung des Keilelements gegeben ist.

Auch kann das Verriegelungselement ein Federelement umfassen, dass eine versehentliche Verlagerung in die Feststellposition verhindert.

Im Folgenden werden in der Zeichnung dargestellte Ausführungsbeispiele der Erfindung erläutert.
- Fig. 1: ein erstes Ausführungsbeispiel eines erfindungsgemäßen Rollenwagens mit Feststell- einrichtung, und
- Fig. 2: ein zweites Ausführungsbeispiel eines erfin- dungsgemäßen Rollenwagens mit Feststellein- richtung.

In allen Figuren werden für gleiche bzw. gleichartige Bauteile übereinstimmende Bezugszeichen verwendet.

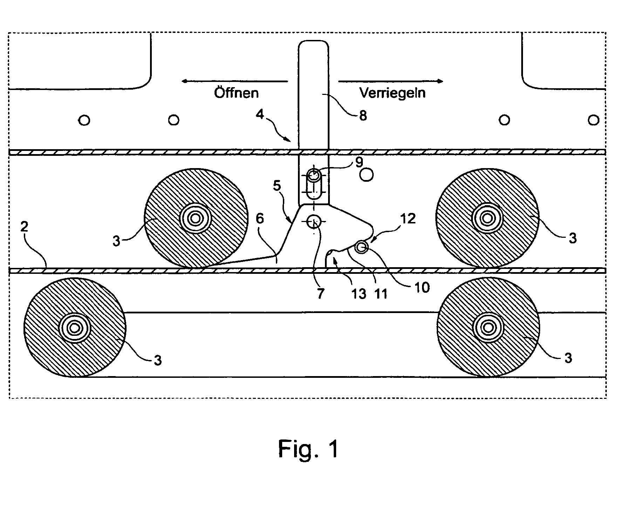

Figur 1 zeigt einen Rollenwagen 1 für ein in der Zeichnung nicht dargestelltes Schiebebügelverdeck für LKW oder LKW-Anhänger.

Dazu sind auf der Ladefläche des LKW entlang der Längsseiten der Ladefläche verlaufende Lauf- und Führungsschienen 2 umfasst, in denen die Rollen 3 der Rollenwagen 1 verschieblich geführt sind. Der dargestellte Rollenwagen 1 ist mit einer Feststelleinrichtung 4 zum Verhindern einer unbeabsichtigten Verlagerung des Rollenwagens 1 entlang der Lauf- und Führungsschienen 2 versehen.

Die Feststelleinrichtung 4 umfasst ein Keilelement 5, welches einer Rolle 3 zugeordnet ist und zwischen einer Freigabeposition und einer Feststellposition verlagerbar ist. In der in der Zeichnung dargestellten Feststellposition ist ein entsprechend keilförmig ausgebildeter Teilbereich 6 des Keilelements 4 zwischen der Rolle 3 und der entsprechenden Lauf- und Führungsschiene 2 angeordnet, so dass eine Feststellung des Rollenwagens 1 aufgrund der Eigenschaft der Selbsthemmung erfolgt und eine Verlagerung in Richtung des Keilelements nicht oder nur in sehr geringem Umfang möglich ist.

Das Keilelement 4 ist um eine Drehachse 7 verschwenkbar mit einem Hebel 8 verbunden, wobei der Hebel 8 um eine von der Drehachse 7 beabstandet angeordnete Schwenklagerung 9 verschwenkbar angeordnet ist. Die Schwenklagerung 9 ist im dargestellten Ausführungsbeispiel durch einen am Rollenwagen 1 angebrachten Bolzen , an dem der Hebel 8 mittels eines Längslochs gelagert ist, gebildet.

Somit ist auf einfache Weise eine Verlagerung des Keilelementes 5 zwischen seiner Freigabeposition und seiner Feststellposition möglich, und durch die Betätigung mittels eines Hebels 8 ist nur eine geringe Kraft für die Verlagerung des Keilelementes 5 erforderlich.

Weiterhin ist ein die Ausrichtung des Keilelements 5 gewährleistendes und eine andere als die durch die Drehachse 7 vorgegebene Verschwenkung des Keilelements 5 zumindest im wesentlichen verhinderndes Führungselement 10 vorgesehen, so dass das Keilelement 5 in seiner Freigabeposition auch keinen Kontakt mit der Lauf- und Führungsschiene 2 hat.

Im dargestellten Ausführungsbeispiel ist das Führungselement 10 als ein an dem Rollenwagen 1 angeordneter und stabförmig ausgeprägter Vorsprung ausgebildet.

An dem Keilelement 5 ist eine mit dem Führungselement 10 zusammenwirkende schräge Fläche 11 vorgesehen, so dass bei Verschwenken des Hebels 8 eine entsprechende "lenkende" Beeinflussung des Keilelements 5 gegeben ist. Weiterhin ist ein Verriegelungselement 12 zur Festlegung des Keilelements 5 in seiner Freigabeposition vorgesehen, so dass eine versehentliche Verlagerung in die Feststellposition nicht möglich ist.

Dabei kann das Verriegelungselement 12 durch das Führungselement 10 gebildet sein und mit einer entsprechenden Aussparung 13 oder dergleichen in dem Keilelement 5 zusammenwirkend ausgebildet sein, so dass eine automatische Verriegelung bei der Verlagerung des Keilelementes 5 in die Freigabeposition erfolgt.

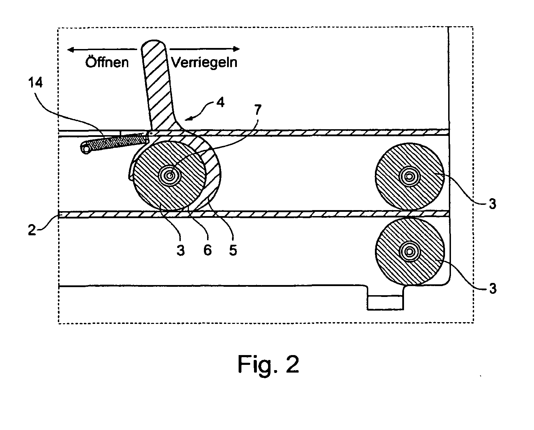

In Figur 2 ist ein alternatives Ausführungsbeispiel dargestellt, bei dem das Keilelement 5 der die Feststelleinrichtung 4, welches einer Rolle 3 zugeordnet ist und zwischen einer Freigabeposition und einer Feststellposition verlagerbar ist, als entlang einer kreissegmentförmig gekrümmten Bahn verlaufender Keil ausgebildet ist.

In der Zeichnung ist die Feststellposition dargestellt, bei der der entsprechend keilförmig ausgebildete Teilbereich 6 des Keilelements 4 zwischen der Rolle 3 und der entsprechenden Lauf- und Führungsschiene 2 angeordnet, so dass eine Feststellung des Rollenwagens 1 aufgrund der Eigenschaft der Selbsthemmung erfolgt und eine Verlagerung in Richtung des Keilelements nicht oder nur in sehr geringem Umfang möglich ist.

Das Keilelement 4 ist um eine Drehachse 7 verschwenkbar mit einem Hebel 8 verbunden, wobei die Drehachse 7 des Keilelements mit der Drehachse der Rolle 3 übereinstimmt, da das Keilelement mittels einer entsprechend ausgestalteten Innenkontur auf der Rolle gelagert ist.

Um die Gefahr eines versehentlichen Feststellens zu verringern ist die Verlagerung des Keilelements 4 nur gegen die Rückstellkraft eines Rückhaltelementes möglich, welches im dargestellten Ausführungsbeispiel als SpiralZugfeder 14 ausgebildet ist. Selbstverständlich sind auch andere Varianten, beispielsweise durch ein Friktionselement oder dergleichen, möglich, und es können auch andere Federtypen, wie z. B. Blattfeder, Druckfeder etc. zum Einsatz kommen.

Somit ist auf einfache Weise eine Verlagerung des Keilelementes 5 zwischen seiner Freigabeposition und seiner Feststellposition möglich, und durch die Betätigung mittels eines Hebels 8 ist nur eine geringe Kraft für die Verlagerung des Keilelementes 5 erforderlich.

## Patentansprüche

1. Schiebebügelverdeck für LKW oder LKW-Anhänger, welches auf der Ladefläche des LKW entlang der Längsseiten der Ladefläche verlaufende Lauf- und Führungsschienen (2) umfasst, in denen Rollen (3) aufweisende Rollenwagen (1) mit jeweils portalartig ausgebildeten Haltebügeln und einer an den Haltebügeln angebrachten Verdeckplane verschieblich geführt sind, wobei zumindest ein Rollenwagen (1) mit einer Feststelleinrichtung (4) zum Verhindern einer unbeabsichtigten Verlagerung des Rollenwagens (1) entlang der Lauf- und Führungsschienen (2) versehen ist, wobei der Rollenwagen (1) ausgebildet ist als ein Rollenwagen (1) für ein Schiebebügelverdeck für LKW oder LKW-Anhänger, welches auf der Ladefläche des LKW entlang der Längsseiten der Ladefläche verlaufende Lauf- und Führungsschienen (2) umfasst, in denen die Rollen (3) aufweisenden Rollenwagen (1), an denen jeweils portalartig ausgebildete Haltebügel mit einer daran angebrachten Verdeckplane angebracht sind verschieblich geführt sind, wobei zumindest ein Rollenwagen (1) mit einer Feststelleinrichtung (4) zum Verhindern einer unbeabsichtigten Verlagerung des Rollenwagens (1) entlang der Lauf- und Führungsschienen (2) versehen ist, wobei die Feststelleinrichtung (4) ein einer Rolle (3) zugeordnetes Keilelement (5) umfasst, welches zwischen einer Freigabeposition und einer Feststellposition verlagerbar ist und in seiner Freigabeposition keinen Kontakt mit der Rolle (3) hat, wohingegen in seiner Feststellposition ein Teilbereich des Keilelements (5) zwischen der Rolle (3) und der entsprechenden Lauf- und Führungsschiene (2) angeordnet ist, **dadurch gekennzeichnet, dass** dadurch eine Feststellung des Rollenwagens in jeder gewünschten Position möglich ist, wobei das Verriegelungselement (12) durch das Führungselement (10) gebildet ist und mit einer entsprechenden Aussparung (13) in dem Keilelement (5) zusammenwirkend ausgebildet ist und wobei ein Verriegelungselement (12) zur Festlegung des Keilelements (5) in seiner Freigabeposition vorgesehen ist und wobei zumindest ein die Ausrichtung des Keilelements (5) gewährleistendes und eine andere als die durch die Drehachse (7) vorgegebene Verschwenkung des Keilelements (5) zumindest im wesentlichen verhinderndes Führungselement (10) vorgesehen ist.

2. Rollenwagen (1) nach dem vorhergehenden Anspruch, **dadurch gekennzeichnet, dass** das Keilelement (5) um eine Drehachse (7) verschwenkbar mit einem Hebel (8) verbunden oder an diesem angebracht ist.

3. Rollenwagen (1) nach dem vorhergehenden Anspruch, **dadurch gekennzeichnet, dass** der Hebel (8) um eine von der Drehachse (7) beabstandet angeordnete Schwenklagerung (9) verschwenkbar angeordnet ist.

4. Rollenwagen (1) nach dem vorhergehenden Anspruch, **dadurch gekennzeichnet, dass** das Führungselement (10) als ein an dem Rollenwagen (1) angeordneter, insbesondere stabförmig ausgeprägter, Vorsprung ausgebildet ist und an dem Keilelement (5) eine mit diesem Vorsprung zusammenwirkende schräge Fläche (11) vorgesehen ist.

## Claims

1. Slide bracket cover for HGVs or HGV trailers, which includes runners and guide rails (2) running on the load bed of the HGV along the long side of the load bed in which trolleys (1) with rollers (3) and having holding brackets each formed as a portal with a cover arranged on the holding brackets are relocatably guided, wherein at least one trolley (1) has a locking device (4) to prevent an unintentional movement of the trolley (1) along the runners and guide rails (2), wherein the trolley (1) is formed as a trolley (1) for a slide bracket cover for HGVs or HGV trailers, which includes runners and guide rails (2) running along the long sides of the includes runners and guide rails (2) running on the load bed of the HGV along the long side of the load bed, in which the trolleys (1) with rollers (3), on which holding brackets each formed as a portal with a cover arranged on it are relocatably guided, wherein at least one trolley (1) is fitted with a locking device (4) to prevent an unintentional movement of the trolley (1) along the runners and guide rails (2), wherein the locking device (4) includes a wedge element (5) allocated to a roller (3), said wedge element being moveable between a release position and a locked position and in its release position has no contact with the roller (3), whereas in its locked position a partial area of the wedge element (5) is disposed between the roller (3) and the corresponding runner and guide rail (2) **characterised in that** in this way the trolley can be locked in any desired position, wherein the locking element (12) is formed by the guide element (10) and is formed to interact with a corresponding recess (13) in the wedge element (5) and wherein a locking element (12) is provided to hold the wedge element (5) in its release position and wherein at least one guide element (10) is provided which guarantees the orientation of the wedge element (5) and which substantially prevents any other swivelling of the wedge element (5) than that set by the axis of rotation (7).

2. Trolley (1) according to the previous claim **characterised in that** the wedge element (5) can be swivelled around an axis of rotation (7) with a lever (8) connected to it or disposed on it.

3. Trolley (1) according to the previous claim **characterised in that** the lever (8) is arranged such that it can be swivelled around a swivel bearing (9) arranged at a distance from the axis of rotation (7).

4. Trolley (1) according to the previous claim, **characterised in that** the guide element (10) is formed as a projection disposed on the trolley (1) being in particular distinctly rod-shaped, and on the wedge element (5) a slanting surface (11) interacting with this projection is provided.

## Revendications

1. Bâche à arceaux coulissants, dévolue à des poids lourds ou à des remorques de poids lourds et équipée de glissières (2) de roulement et de guidage qui s'étendent sur la surface de chargement du poids lourd, le long des côtés longitudinaux de ladite surface de chargement, et dans lesquelles sont guidés, à coulissement, des chariots (1) pourvus de rouleaux (3) et présentant des arceaux de retenue respectivement réalisés à la manière de portiques, et une toile de bâchage implantée sur lesdits arceaux de retenue, au moins un chariot (1) à rouleaux étant doté d'un dispositif d'immobilisation (4) conçu pour empêcher un déplacement involontaire dudit chariot (1) à rouleaux le long des glissières (2) de roulement et de guidage, ledit chariot (1) à rouleaux étant réalisé sous la forme d'un chariot (1) à rouleaux destiné à une bâche à arceaux coulissants dévolue à des poids lourds ou à des remorques de poids lourds, équipée de glissières (2) de roulement et de guidage qui s'étendent sur la surface de chargement du poids lourd, le long des côtés longitudinaux de ladite surface de chargement, et dans lesquelles sont guidés, à coulissement, les chariots (1) pourvus de rouleaux (3) et sur lesquels sont montés des arceaux de retenue respectivement réalisés à la manière de portiques, et associés à une toile de bâchage implantée sur lesdits arceaux, sachant qu'au moins un chariot (1) à rouleaux est doté d'un dispositif d'immobilisation (4) conçu pour empêcher un déplacement involontaire dudit chariot (1) à rouleaux le long des glissières (2) de roulement et de guidage, ledit dispositif d'immobilisation (4) comportant un élément de calage (5) qui est affecté à un rouleau (3), est mobile entre une position de libération et une position d'arrêt, et ne présente aucun contact avec ledit rouleau (3) dans sa position de libération, tandis qu'en revanche, dans sa position d'arrêt, une région partielle dudit élément de calage (5) est interposée entre ledit rouleau (3) et la glissière correspondante (2) de roulement et de guidage, **caractérisée par le fait qu'**un arrêt du chariot à rouleaux est possible, de la sorte, à chaque emplacement souhaité, sachant que l'élément de verrouillage (12) est formé par l'élément de guidage (10) et est conçu pour coopérer avec une dépouille correspondante (13) pratiquée dans l'élément de calage (5), sachant qu'un élément de verrouillage (12) est prévu pour consigner à demeure ledit élément de calage (5) dans sa position de libération, et sachant qu'il est prévu au moins un élément de guidage (10) qui garantit l'orientation dudit élément de calage (5) et qui empêche, au moins pour l'essentiel, un pivotement dudit élément de calage (5) autre que celui préétabli par l'axe de rotation (7).

2. Chariot (1) à rouleaux selon la revendication précédente, **caractérisé par le fait que** l'élément de calage (5) est relié à un levier (8) avec faculté de pivotement autour d'un axe de rotation (7), ou est ménagé sur ledit levier.

3. Chariot (1) à rouleaux selon la revendication précédente, **caractérisé par le fait que** le levier (8) est agencé à pivotement autour d'un pivot (9) disposé à distance de l'axe de rotation (7).

4. Chariot (1) à rouleaux selon la revendication précédente, **caractérisé par le fait que** l'élément de guidage (10) se présente comme une protubérance disposée sur ledit chariot (1) à rouleaux et revêtant, en particulier, la forme prononcée d'une barrette, une surface inclinée (11), coopérant avec cette protubérance, étant prévue sur l'élément de calage (5).
